# EUROPÄISCHE PATENTANMELDUNG

(11) **EP 0 895 186 A2**
(43) Veröffentlichungstag der Anmeldung: **03.02.1999**
(21) Anmeldenummer: 98113437.2
(22) Anmeldetag: 18.07.1998
(51) Int. Cl.: G06K 19/077

(54) **Karte zum Prüfen von Kräften auf Kontakten einer IC-Karte**

(30) Priorität: 02.08.1997 DE 19733468
(71) Anmelder: Orga Consult GmbH, 33104 Paderborn (DE)
(72) Erfinder: Seelbach, Frank, 33154 Salzkotten (DE)

(57) **Zusammenfassung**

Die Erfindung betrifft eine Karte (1) zum Prüfen von Anlagekräften von Kontakten eines Kartenlesegerätes, die durch einen Schlitz des Kartenlesegerätes einsteckbar ist, wobei aus der Oberflächenbeschaffenheit der Karte (1) die auf dieselbe während des Prüfvorgangs wirkenden Anlagekräfte der Kontakte bestimmbar sind.

## Beschreibung

Die Erfindung betrifft eine Karte zum Prüfen von Anlagekräften von Kontakten eines Kartenlesegeräts, die durch einen Schlitz des Kartenlesegeräts einsteckbar ist.

Bei der Benutzung einer Chipkarte, insbesondere einer Telefonkarte, Bankkarte etc., kann es vorkommen, daß eine ordnungsgemäße Kommunikation zwischen der Karte und dem Kartenlesegerät nicht zustande kommt, weil die Kontaktverbindung zwischen den Kontakten des Kartenlesegeräts und den Kontaktflächen der Karte nicht gegeben ist. Dies kann unter anderem in einer mangelnden Anlagekraft der Kontakte des Kartenlesegeräts bezüglich der Kontaktflächen der Chipkarten begründet sein.

Zum Prüfen dieser Anlagekräfte ist es bereits bei Testlaboratorien bekannt, eine Karte zum Prüfen der Anlagekräfte vorzusehen, die an den Stellen der Kontaktflächen statt derselben Drucksensoren aufweist, die in der Prüfposition, also in der eingesetzten Stellung der Karte, die Anlagekräfte detektieren und die Prüfsignale mittels Signalleitungen an eine externe Auswerteeinheit leiten. Nachteilig an dieser bekannten Karte ist, daß die Prüfung relativ aufwendig und schlecht handhabbar ist. Sie ist nur in Kartenlesegeräten anwendbar, die keine automatische Schließeinrichtung in einem Eingangsbereich des Geräts aufweisen.

Aufgabe der Erfindung ist es daher, eine Karte zum Prüfen von Anlagekräften von Kontakten eines Kartenlesegeräts derart auszubilden, daß eine einfache und schnelle Prüfung der Anlagekräfte gewährleistet ist.

Zur Lösung dieser Aufgabe ist die Erfindung dadurch gekennzeichet, daß in einem Oberflächenbereich der Karte Mittel vorgesehen sind, derart, daß aus der Oberflächenbeschaffenheit der Karte die auf dieselbe während des Prüfvorgangs wirkenden Anlagekräfte der Kontakte bestimmbar sind.

Der Vorteil der Erfindung liegt insbesondere darin, daß schon die Karte selbst der Bedienperson ein sichtbares Ergebnis des Prüfvorgangs vermittelt, so daß auf einfache Weise das Prüfergebnis festgestellt werden kann. Die erfindungsgemäße Karte kann platzsparend in jeder Wartungstasche untergebracht werden und kann an jedem beliebigen Einsatzort eingesetzt werden, ohne daß weitere Bauteile erforderlich wären. Sie stellt daher auch ein kostengünstiges Prüfmittel dar.

Nach einer ersten Ausführungsform der Erfindung ist in dem zu den Kontakten des Kontaktlesegeräts korrespondierenden Bereich der Karte ein Prüffeld mit plastisch verformbaren Prüfelementen vorgesehen, so daß anhand der Verformung der Prüfelemente auf das Vorliegen ordnungsgemäß kontaktierender Kontakte bzw. Höhe der Anlagekräfte der Kontakte geschlossen werden kann.

Nach einer weiteren Ausführungsform der Erfindung weist eine Karte eine zusätzliche Prüfschicht auf, die ein druckbares Prüfmaterial umfaßt. Während des Prüfvorgangs wird das Prüfmaterial ggf. durch die Kontakte auf die Kartenoberfläche gepreßt und bleibt auf dieser haften. Vorteilhaft kann bei dieser Ausführung die Karte wiederverwendet werden. Nur die Prüfschicht braucht für den nächsten Prüfvorgang erneuert werden.

Alternativ kann auch die gesamte Prüfschicht ein Prüfmaterial umfassen, so daß mögliche, über die gesamte Kartenoberfläche verteilt wirkende mechanische Beanspruchungen erkannt werden können.

Nach einer weiteren Ausführungsform der Erfindung weist ein Prüffeld Prüfelemente auf, die in Abhängigkeit von der auf dieselbe ausgeübte Kraft eine unterschiedliche Farbe annimmt. Anhand der sich dauerhaft einstellenden Farbe der Prüfelemente kann auf das Vorliegen bzw. auf die Höhe der Anlagekraft geschlossen werden.

Vorteilhaft ist auf der Kartenoberfläche ein Referenzelement aufgebracht, so daß das Prüfergebnis mit einem Referenzwert verglichen werden kann. Alternativ kann auch eine externe Referenztabelle vorgesehen sein, die zur Ermittlung des Prüfergebnisses neben das Prüfelement gehalten wird.

Weitere Vorteile der Erfindung ergeben sich aus den weiteren Unteransprüchen.

Ausführungsbeispiele der Erfindung werden nachfolgend anhand der Zeichnung näher beschrieben.

Es zeigen:
- Fig.1: eine Draufsicht auf eine Karte nach einem ersten Ausführungsbeispiel der Erfindung,
- Fig.2: einen Querschnitt der Karte im Ausgangszustand derselben entlang der Linie I-I aus Fig.1,
- Fig.3: einen Querschnitt der Karte nach dem Prüfvorgang derselben entlang der Linie I-I aus Fig.1,
- Fig.4: eine Draufsicht auf eine Karte nach einem zweiten Ausführungsbeispiel der Erfindung,

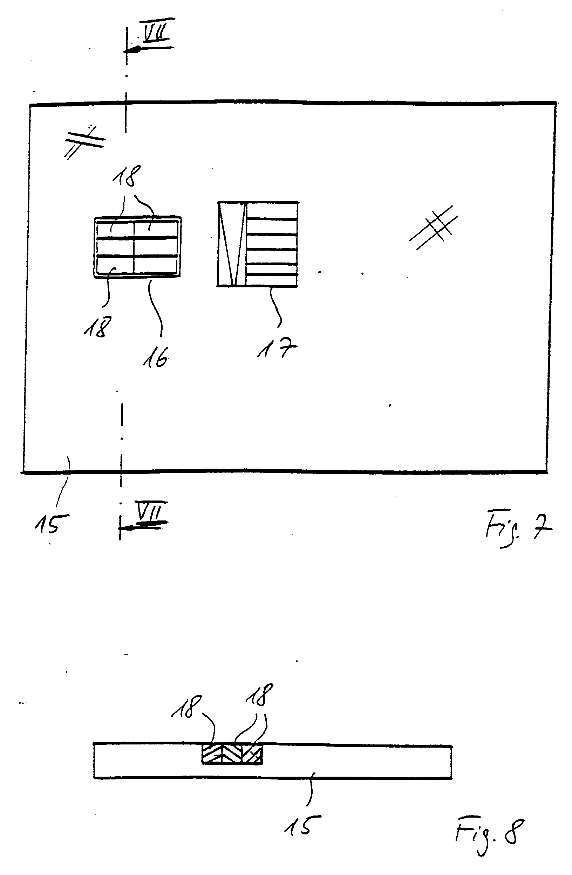

- Fig.5: einen Querschnitt der Karte im Ausgangszustand derselben entlang der Linie IV-IV aus Fig.4,
- Fig.6: einen Querschnitt der Karte nach dem Prüfvorgang entlang der Linie IV-IV aus Fig.4,
- Fig.7: eine Draufsicht auf eine Karte nach einem dritten Ausführungsbeispiel der Erfindung und
- Fig.8: einen Querschnitt der Karte im Ausgangszustand derselben entlang der Linie VII-VII aus Fig.7.

Die nachfolgend beschriebenen Karten dienen zum Prüfen von Anlagekräften von Kontakten eines Kartenlesegeräts. Sie können überall dort eingesetzt werden, wo schnell ein Ergebnis über das Vorhandensein zuverlässiger Kontaktierungskräfte erzielt werden soll.

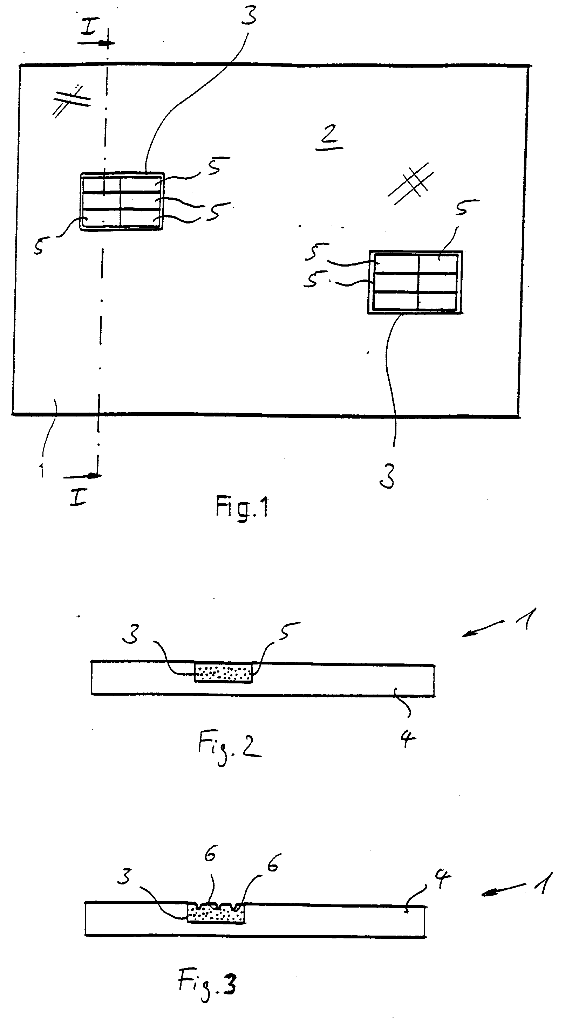

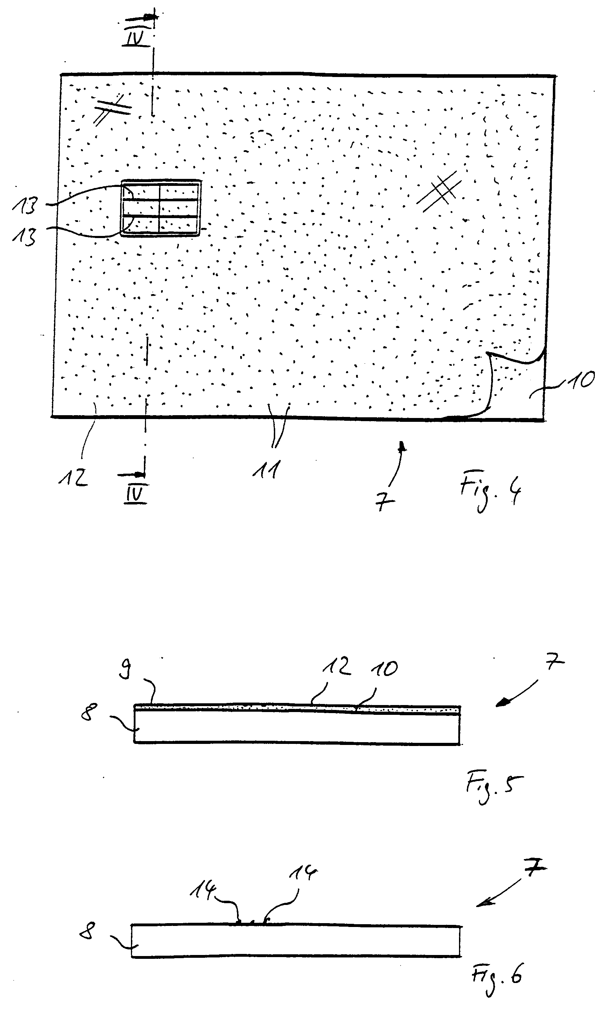

Nach einem ersten Ausführungsbeispiel der Erfindung gemäß Fig.1 bis Fig.3 ist eine in ihren Abmessungen normgerechte Karte 1 mit zwei auf einer Oberseite 2 angeordneten Prüffeldern 3 versehen. Die Prüffelder 3 sind jeweils in einem Bereich angeordnet, der zu einem Kontaktbereich eines nicht dargestellten Kartenlesegeräts korrespondiert, wobei die Karte 1 durch einen Schlitz des Kartenlesegeräts in eine dafür vorgesehene Kontaktierungsposition gebracht wird.

Die Karte 1 weist einen aus einem Kunststoff gespritzten Tragkörper 4 mit einer Vertiefung auf, in der das Prüffeld 3 eingefaßt ist. Das Prüffeld 3 schließt mit seiner Oberfläche bündig mit der Oberfläche des Tragkörpers 4 ab, so daß die Kartenoberfläche im Ausgangszustand eine ebene Fläche bildet. Das Prüffeld 3 ist entsprechend der ISO-Norm 7816 auf der Karte 1 angeordnet.

Das Prüffeld 3 besteht aus mehreren Prüfelementen 5, die jeweils zu den einzelnen Kontakten des Kartenlesegeräts korrespondieren. Damit die von den Kontakten ausgehenden Anlagekräfte in der eingesteckten Position der Karte feststellbar sind, bestehen die Prüfelemente 5 aus einem plastisch verformbaren Material, so daß nach Entnahme der Karte 1 aus dem Kartenlesegerät aus der bleibenden Verformung der Prüfelemente 5 auf das Vorliegen ordnungsgemäßer Anlagekräfte geschlossen werden kann. Die Prüfelemente 5 bestehen vorzugsweise aus einem pastenartigen Kunststoff aus PVC und einen Weichmacher.

Nach Beendigung des Prüfvorgangs weisen die Prüfelemente 5 in Abhängigkeit von der Höhe der Andruckkraft der Kontakte Vertiefungen 6 auf, so daß unmittelbar nach Entnahme der Karte 1 aus dem Kartenlesegerät einerseits visuell das Vorliegen von Anlagekräften ermittelt werden kann. Andererseits kann mittels bekannter Laser-, Ultraschallmeßverfahren oder anderer Meßverfahren aus der Form oder der Eindringtiefe die Höhe der Andruckkraft bestimmt werden kann.

Durch das Vorhandensein zweier Prüffelder 3 auf einer Kartenseite kann die Karte 1 mehrfach genutzt werden. Die Karte 1 kann auch andere Abmessungen aufweisen. Wichtig ist nur, daß die Prüffelder 3 in die dafür vorgesehene Prüfposition in dem Kartenlesegerät bringbar sind.

Nach einem zweiten Ausführungsbeispiel der Erfindung ist eine Karte 7, bestehend aus einem Tragkörper 8 und einer Prüfschicht 9 vorgesehen, wobei sich die Prüfschicht 9 auf der gesammten Kartenoberfläche 10 erstreckt. Die Prüfschicht 9 weist gleichverteilte Kohlepartikel 11 auf, die sich zwischen der Kartenoberfläche 10 und einer transparenten Folie 12 der Prüfschicht 9 erstrecken. Auf dem Tragkörper 8 selbst ist in einem vorgesehenen Bereich eine Prüffeldmarkierung mittels Prüffeldlinien 13 aufgebracht. Der Tragkörper 8 kann durch ein Laminationsverfahren oder durch Spritzgießen hergestellt worden sein. Die Prüfschicht 9 kann darauffolgend auf den Tragkörper 8 aufgebracht werden.

Zur Prüfung des Vorliegens ordnungsgemäßer Kontakte in einem Kartenlesegerät wird die beschichtete Karte 7 in das Kartenlesegerät eingeführt. Nach der Entnahme der Karte 7 wird die Folie 12 von der Oberfläche des Tragkörper 8 abgezogen. Wie aus Fig. 6 deutlich wird, entsteht für den Fall, daß eine ordnungsgemäße Kontaktierung gegeben ist, in dem entsprechenden Bereich auf der Oberfläche des Tragkörpers 8 ein Abdruck 13. Die Folie 12 und die Oberfäche des Tragkörpers 8 ist derart ausgebildet, daß bei Vorliegen einer Andruckkraft die von der Oberfläche des Tragkörpers 8 auf die Kohlepartikel wirkenden Adhäsionskräfte größer sind als diejenigen von der Folie 12. Es bilden sich Andruckstellen 14 auf der Kartenoberfläche, so daß gegebenenfalls vorliegende Andruckkräfte lokalisiert werden können. Es kann somit eine gut sichtbare Überprüfung der Kontaktierung gewährleistet werden.

Vorteilhaft kann die gesamte Fläche der Folie 12 mit Kohlepartikeln versehen sein, so daß gegenbenenfalls auch Kratzspuren auf dem restlichen Teil der Karte 7 festgestellt werden können.

Nach einem dritten Ausführungsbeispiel der Erfindung gemäß Fig. 7 und Fig. 8 weist eine Karte 15 in dem vorgesehenen Bereich eine Prüffläche 16 auf, die kräfteabhängig eine dauerhafte Veränderung in der Farbe erfährt. Anhand der sich nach dem Prüfvorgang einstellenden Farbe von das Prüffeld 16 bildenden Prüfelementen 18 kann auf das Vorliegen bzw. die Höhe der Andruckkräfte geschlossen werden. Zu diesem Zweck ist in der Nähe des Prüffeldes 16 eine Referenzelement 17 angeordnet, so daß durch Farbenvergleich mit den Prüfelementen 18 nach der Entnahme der Karte 15 aus dem Kartenlesegerät auf die Anlagekraft geschlossen werden kann. Das Referenzelement 17 kann auf der Oberfläche der Karte 15 aufgedruckt sein. Die Prüfelemente 18 sind in einer Vertiefung der Karte 15 eingefaßt. Infolge von mechanischen Spannungsänderungen innerhalb der Prüfelemente 18 erfolgt eine länger andauernde Farbänderung, die zu dem vorgenannten Prüfzweck genutzt wird.

Alternativ kann die Prüffläche 16 auch aus einem Material bestehen, so daß nur für eine bestimmte Zeitspanne eine Veränderung der Farbe in Abhängigkeit von dem Anlagedruck eintritt und sie dann wieder den Ausgangszustand einnimmt. Auf diese Weise kann die Karte mehrfach genutzt werden.

## Patentansprüche

1. Karte zum Prüfen von Anlagekräften von Kontakten eines Kartenlesegerätes, die durch einen Schlitz des Kartenlesegerätes einsteckbar ist, dadurch gekennzeichnet, daß aus der Oberflächenbeschaffenheit der Karte (1, 7, 15) die auf dieselbe während des Prüfvorgangs wirkenden Anlagekräfte der Kontakte bestimmbar sind.

2. Karte nach Anspruch 1, dadurch gekennzeichnet, daß die Karte (1) mindestens ein Prüffeld (3) aufweist mit mehreren zu den Kontakten des Kartenlesegerätes korrespondierend angeordneten Prüfelementen (5) und daß die Prüfelemente (5) aus einem plastisch verformbaren Werkstoff bestehen, derart, daß nach dem Prüfvorgang aus der Verformung des Prüfelements (5) auf das Vorliegen und/oder die Höhe der Anlagekraft geschlossen werden kann.

3. Karte nach Anspruch 2, dadurch gekennzeichnet, daß die Karte (1) in ihren Abmessungen im wesentlichen normgerecht ausgebildet ist, wobei die Oberfläche des Prüffeldes (3) bündig mit der dieselbe umgebenden Oberfläche der Karte (1) abschließt.

4. Karte nach Anspruch 2 oder 3, dadurch gekennzeichnet, daß auf einer Kartenseite zwei normgerecht angeordnete Prüffelder (3) positioniert sind.

5. Karte nach einem der Ansprüche 2 bis 4, dadurch gekennzeichnet, daß das Prüfelement (5) aus einem pastenartigen Kunststoff besteht.

6. Karte nach einem der Ansprüche 2 bis 5, dadurch gekennzeichnet, daß das Prüfelement (5) aus einem PVC-Material und einem Weichmacher besteht.

7. Karte nach Anspruch 1, dadurch gekennzeichnet, daß die Karte (7) auf der Kartenoberfläche (10) eine zusätzliche Prüfschicht (9) aufweist, die in Abhängigkeit von den Anlagekräften eine unterschiedliche Oberflächenstruktur verursacht.

8. Karte nach Anspruch 7, dadurch gekennzeichnet, daß die Prüfschicht (9) als abziehbare Folie (12) ausgebildet ist, wobei in Abhängigkeit von den Anlagekräften ein Prüfmaterial (11) einerseits an der Folie (12) oder andererseits auf der Kartenoberfläche (10) haften bleibt.

9. Karte nach Anspruch 7 oder 8, dadurch gekennzeichnet, daß die Beschaffenheit der Kartenoberfläche (10) und der Folie (12) derart ausgebildet ist, daß das Prüfmaterial (11) bei fehlender Anlagekraft auf einer Oberfläche der Folie (12) haftet.

10. Karte nach einem der Ansprüche 7 bis 9, dadurch gekennzeichnet, daß das Prüfmaterial (11) als kohlehaltiger Werkstoff ausgebildet ist, der während des Prüfvorgangs zwischen der Folie (12) und der Kartenoberfläche (10) preßbar ist.

11. Karte nach Anspruch 1, dadurch gekennzeichnet, daß die Kartenoberfläche der Karte (15) zumindest bereichsweise als kraftabhängiges Prüffeld (16) mit Prüfelementen (18) ausgebildet ist, die in Abhängigkeit von der Anlagekraft eine unterschiedliche Farbe annehmen.

12. Karte nach Anspruch 11, dadurch gekennzeichnet, daß der Karte (15) ein gesondertes Referenzelement (17) zugeordnet ist mit einer Farbskala, anhand dessen durch Vergleich derselben mit der Farbe des Prüfelements (18) die Höhe der Anlagekraft oder ein Anlagekraftbereich bestimmbar ist.

13. Karte nach einem der Ansprüche 1 bis 12, dadurch gekennzeichnet, daß das Referenzelement (17) auf der Karte (15) integriert ist.
